# EUROPÄISCHE PATENTSCHRIFT

(11) **EP 0 522 673 B1**
(45) Veröffentlichungstag und Bekanntmachung des Hinweises auf die Patenterteilung: **08.01.1997**
(21) Anmeldenummer: 92250181.2
(22) Anmeldetag: 09.07.1992
(51) Int. Cl.: F04B 41/06, F04B 25/00, F04B 35/00, F02B 41/10, F02B 63/06, F04C 23/00, F02C 6/06

(54) **Verdichteranlage**
Compressor unit
Ensemble compresseur

(30) Priorität: 10.07.1991 DE 4123208
(43) Veröffentlichungstag der Anmeldung: 13.01.1993
(73) Patentinhaber: MANNESMANN Aktiengesellschaft, 40027 Düsseldorf (DE)
(72) Erfinder: Wenzel, Harald, W-6471 Kefenrod (DE)
(74) Vertreter: Presting, Hans-Joachim, Dipl.-Ing.

(56) Entgegenhaltungen:
- US-A- 2 628 015
- US-A- 2 811 302
- US-A- 3 715 887
- PATENT ABSTRACTS OF JAPAN vol. 009, no. 294 (M-431) & JP-A-60 132 016 (MORIYOSHI KIKOMOTO)

## Beschreibung

Die Erfindung betrifft eine Verdichteranlage zur Erzeugung von Druckluft mit einem Verdichter, der durch die Nutzseite einer Wärmekraftmaschine angetrieben wird, wobei die Energie der Wärmekraftmaschine im wesentlichen für den Antrieb des Verdichters genutzt wird, und über eine Leitung mit den Verbrauchsstellen verbunden ist und einem Abgasturbolader, der antriebsseitig an der Abgasseite der Wärmekraftmaschine angeschlossen und über eine Leitung mit dem Verdichter verbunden ist.

Im Zuge zunehmend verantwortungsvollerem Umgang mit natürlichen Ressourcen ist es insbesondere für den kommerziellen Anwender von Großverbrauchern an Energie zweckmäßig, durch verbesserte Wirkungsgrade der verwendeten Maschinen und Anlagen anteilsmäßig Energie zu sparen. Auch auf dem Gebiet der Verdichtertechnik sind vielfältige Versuche unternommen worden, entstehende Prozeßabwärme inner- und außerprozessual zu verwenden, um die Energiebilanz zu verbessern und damit den Gesamtwirkungsgrad zu erhöhen.

Aus der gattungsbildenden JP-A-6012016 ist eine Verdichteranlage zur Erzeugung von Druckluft bekannt, bei der ein Turboverdichter durch die Nutzseite einer Wärmekraftmaschine angetrieben wird. Dem Turboverdichter nachgeordnet ist ein Abgasturbolader vorgesehen, der antriebsseitig an der Abgasseite der Wärmekraftmaschine angeschlossen ist und dessen Verdichterteil einerseits über eine Leitung mit der Druckleitung des Turboverdichters und andererseits über eine Leitung mit den Verbrauchsstellen verbunden ist. Damit der Turboverdichter mit der erforderlichen hohen Drehzahl angetrieben werden kann, ist zwischen der Abtriebsseite der Wärmekraftmaschine und der Antriebsseite des Turboverdichters ein einstufiges Getriebe angeordnet.

Aus der DE-OS 29 12 190 ist eine Anordnung zur Erzeugung von Druckluft bekannt, bei dem die Abgasseite einer Mehrzylinder-Hubkolben-Brennkraftmaschine an die Antriebsseite eines Abgasturboladers angeschlossen ist. Die vom Frischluftverdichter des Abgasturboladers angesaugte und verdichtete Luft wird über einen Zwischenkühler der Saugseite der Brennkraftmaschine zugeführt. Nach dem Zwischenkühler zweigt von der zur Brennkraftmaschine führenden Ladeleitung eine Leitung ab, die mit der Saugseite eines Luftpressers z.B. einem Kolbenverdichter verbunden ist.

Die Druckleitung des Luftpressers ist mit den bei Kraftfahrzeugen mittels Druckluft gespeister Hilfsaggregate wie Fahrzeug-Bremsen, Luftfederung, Türöffner usw. verbunden. Durch diese vorgeschlagene Anordnung wird erreicht, daß ein zusätzlicher Luftfilter für den Luftpresser eingespart und durch Senkung der Verdichtungsendtemperatur die thermische Belastung der Bauteile des Luftpressers geringer wird.

Weiterhin ist ein Verfahren zum Betrieb eines Verdichters mit einer Verbrennungsmaschine zur speziellen Erzeugung von hochtemperiertem Hochdruckgas bekannt (EP 0 248 640), bei der die Abwärme der Verbrennungsmaschine nutzbringend zur Temperaturerhöhung des komprimierten Gases verwendet wird. Trotz des auf diese Art verbesserten Gesamtwirkungsgrades ist diese Arbeitsweise jedoch nur auf den speziellen Anwendungsfall beschränkt und für üblicherweise gekühltes Druckgas unbrauchbar.

Weiterhin ist ein mehrstufiger Verdichter bekannt, zwischen dessen einzelnen Verdichtstufen Kühler vorgesehen sind, die integraler Bestandteil einer Wärmepumpe sind (DE-OS 31 34 844). Dabei wird die im Prozeß entstehende Verdichtungswärme in extern nutzbare Wärme überführt. Eine interne Verwendung der so bereitgestellten Wärme ist nicht vorgesehen. Damit wird zwar die Energiebilanz der Verdichteranordnung verbessert, jedoch sind externe Prozesse zur nutzbringenden Verwendung der rückgewonnenen Energie notwendig. Für einen autonomen ortsveränderlichen Verdichter ist diese Form der Wirkungsgradverbesserung unzweckmäßig.

Aufgabe der Erfindung ist es, den Gesamtwirkungsgrad, d.h. das Verhältnis der benötigten Antriebsenergie zur verdichteten Gasmenge einer gattungsgemäßen Verdichteranlage zu verbessern.

Diese Aufgabe wird erfindungsgemäß mit den im kennzeichnenden Teil des Patentanspruchs 1 angegebenen Merkmalen gelöst.
Die weitere Ausgestaltung der Erfindung geht aus den Merkmalen der Unteransprüche hervor.

Bei dem Verdichter in der erfindungsgemäßen Verdichteranlage handelt es sich grundsätzlich um einen solchen mit veränderlichem Verdichtungsraum, wie z.B. Kolben- und Schraubenkompressor, und bei der Wärmekraftmaschine handelt es sich um Hubkolbenmaschinen, wie z.B. Diesel- und Benzinmotoren sowie um Drehkolbenmaschinen und Gasturbinen jeder Art. Das zu verdichtende Gas ist insbes. Luft, jedoch auch jedes andere gasförmige Medium, das sich zur Verdichtung eignet. Als Zwischenkühler eignen sich Wärmetauscher jeglicher Art, die zur Kühlung eines Gases, insbes. Luft, geeignet sind. Als Kühlmedium kommt die Umgebungsluft in Betracht sowie auch alle anderen zur Kühlung geeigneten Medien im offenen wie auch im geschlossenem System. Als Abgasturbolader eignen sich insbesondere solche mit radialem Laufrad auf der Verdichter- und Turbinenseite, jedoch auch alle anderen Abgasturbolader, z.B. mit axialem Turbinenlaufrad oder auch bei größeren Leistungen mit mehrstufiger Ausbildung.

Ausgehend von einem für sich bekannten Verdichter, der das zu komprimierende Gas durch einen Filter und eine Ansaugleitung bezieht und durch eine Druckleitung in einen Druckbehälter speist sowie durch eine Wärmekraftmaschine nutzseitig betrieben wird, ist mindestens ein Abgasturbolader vorgesehen. Dieser Abgasturbolader ist wahlweise zur Vor- bzw. Vor- und Nachverdichtung dem Verdichter vor- bzw. vor- und nachgeordnet und wird mit dem Abgas der Wärmekraftmaschine betrieben. Besonders vorteilhaft ist es, das zu komprimierende Gas sowohl vor- als auch nachzuverdichten, wobei infolge des geringeren Verdichtungsverhältnisses jeder einzelnen Verdichtungsstufe der Gesamtwirkungsgrad weiter verbessert wird. Der Gesamtwirkungsgrad wird darüber hinaus noch weiter erhöht durch Einbau je eines Wärmetauschers als Zwischenkühler zwischen die einzelnen Verdichtungsstufen, weil durch die Temperaturabsenkung des komprimierten Gases der Energiebedarf der Verdichteranlage gesenkt wird.

Ausführungsbeispiele der Erfindung sind in der Zeichnung dargestellt und werden nachstehend erläutert. Es zeigen
- Fig. 1: eine Prinzipdarstellung der erfindungsgemäßen Verdichteranlage,
- Fig. 2: eine Verdichteranlage mit dem Verdichter vorgeordnetem Abgasturbolader,
- Fig. 3: eine Verdichtranlage nach Fig. 2 mit eingefügtem Zwischenlager,
- Fig. 4: eine Verdichteranlage mit einem dem Verdichter vorgeordnetem und einem dem Verdichter nachgeordnetem Abgasturbolader,
- Fig. 5: eine Verdichteranlage nach Fig. 4 mit eingefügtem Zwischenkühler,

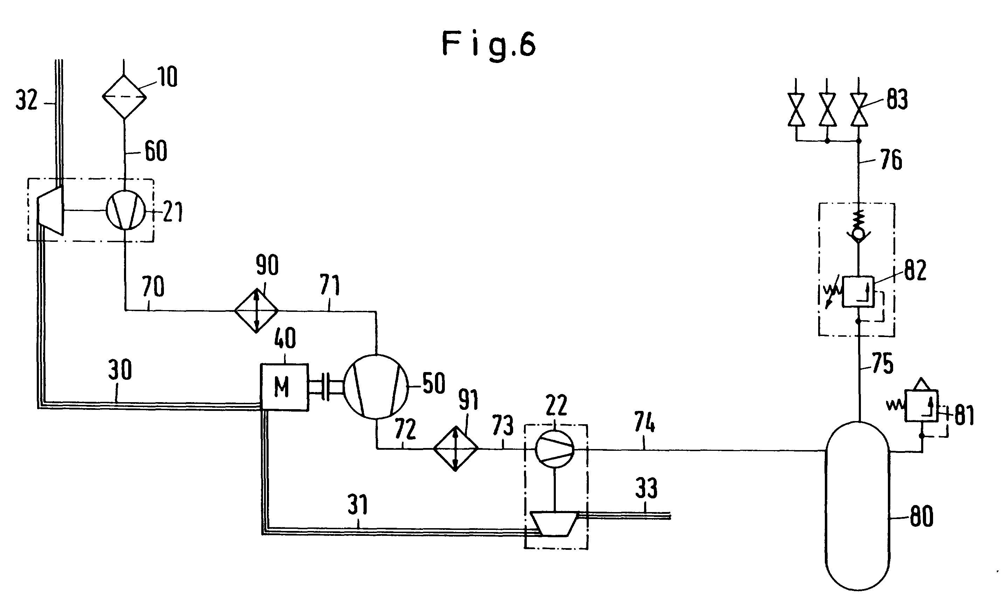

- Fig. 6: eine Verdichteranlage nach Fig. 4 mit zwei eingefügten Zwischenkühlern und
- Fig. 7: eine Verdichteranlage mit besonderer Art der Abgasführung.

Die in den Figuren schematisch dargestellten Funktionspläne umfassen lediglich einige Hauptbaugruppen einer Verdichteranlage sowie die in bezug auf die Erfindung notwendigen Bauteile. Alle anderen zum Betrieb eines Kompressors notwendigen Bauteile und Baugruppen bleiben von der Erfindung unberührt und können je nach Bedarf eingefügt werden, ohne das Wesen der Erfindung zu beeinflussen.

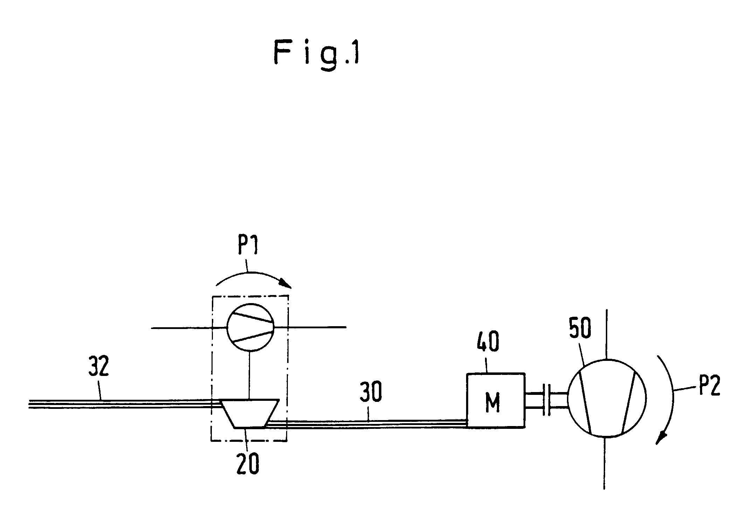

Gemäß Fig. 1 ist an eine für sich bekannte Wärmekraftmaschine 40 nutzseitig ein Verdichter 50 angeschlossen. Dieser Verdichter 50 erzeugt eine Druckdifferenz P2 zwischen seinem Eingang und seinem Ausgang. Erfindungsgemäß ist die Abgasseite der Wärmekraftmaschine 40 über eine Abgasleitung 30 mit einem Abgasturbolader 20 verbunden. Über eine weitere Abgasleitung 32 wird das entspannte Abgas der Wärmekraftmaschine 40 abgeführt. Der Verdichterteil des Abgasturboladers 20 erzeugt eine Druckdifferenz P1. Damit ist gewährleistet, daß sowohl die nutzseitige Energie der Wärmekraftmaschine 40 mit Hilfe des Verdichters 50 als auch die Abgasenergie der Wärmekraftmaschine 40 mit Hilfe des Abgasturboladers 20 in die Zielgröße Druckdifferenz bzw. Verdichtungsverhältnis umgewandelt wird. Durch Reihenschaltung der Verdichterstufen ist die Gesamtdruckdifferenz der Verdichteranlage somit die Summe aller Druckdifferenzen, in diesem Fall P1 + P2. Dabei ist die Reihenfolge der Verdichterstufen im Prinzip unerheblich.

Zur Erzeugung einer vorgegebenen Druckdifferenz ist bei gegebener Verdichteranordnung eine bestimmbare Energie nötig, die als konstante Größe der gegebenen Wärmekraftmaschine 40 entnommen werden kann. Bei gleicher Menge umgesetzter Energie in der Wärmekraftmaschine 40 ist nunmehr wegen des größeren Verdichtungsverhältnisses der Gesamtwirkungsgrad der Verdichteranlage größer und die anfallende Abwärme innerprozessual nutzbringend verbraucht.

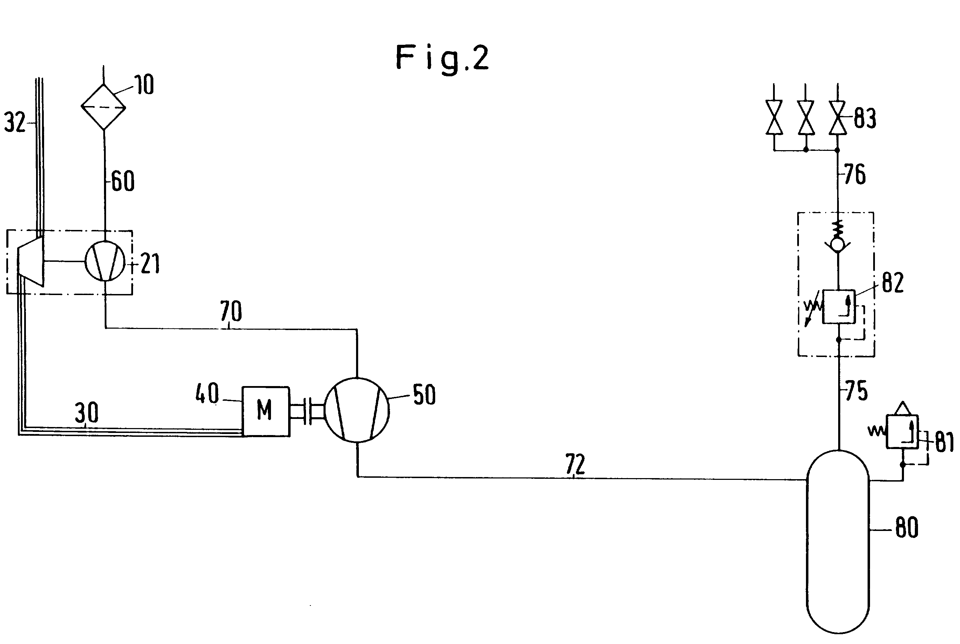

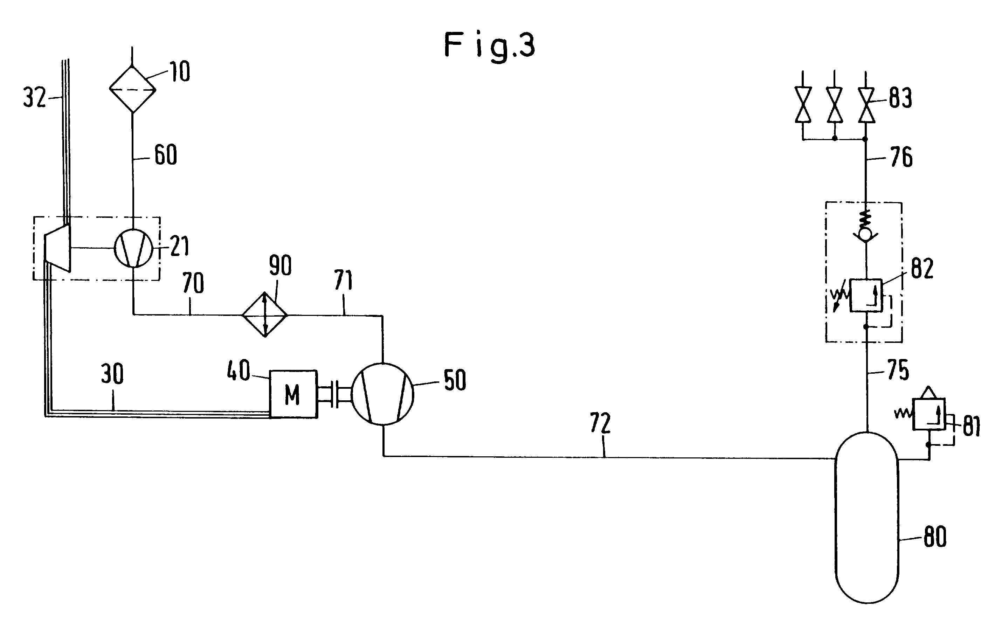

Gemäß Fig. 2 wird das zu verdichtende Gas über den Filter 10 gereinigt und durch die Ansaugleitung 60 von dem Abgasturbolader 21 angesaugt. Das vorverdichtete Gas wird dann durch die Druckleitung 70 dem Verdichter 50 zugeführt. Als Antrieb des Verdichters 50 dient die Wärmekraftmaschine 40. Das Abgas der Wärmekraftmaschine 40 wird durch die Abgasleitung 30 dem Abgasturbolader 21 zugeführt und dann über die Abgasleitung 32 abgeführt. Das verdichtete Gas aus dem Verdichter 50 gelangt über die Druckleitung 72 zu dem Druckbehälter 80. Der Druckbehälter 80 wird durch das Sicherheitsventil 81 überwacht. Aus dem Druckbehälter 80 gelangt das verdichtete Gas durch die Druckleitung 75 über das Druckhalte-Rückschlagventil 82 und durch die Druckleitung 76 zu den Entnahmehähnen 83. Ergänzend dazu ist in Fig. 3 der Zwischenkühler 90 zwischen dem Abgasturbolader 21 und dem Verdichter 50 vorgesehen. Dieser Zwischenkühler 90 kühlt das vorverdichtete Gas und senkt den Leistungsbedarf der Verdichteranlage. Zur Verbindung des Zwischenkühlers 90 mit dem Verdichter 50 ist die Druckleitung 71 vorgesehen.

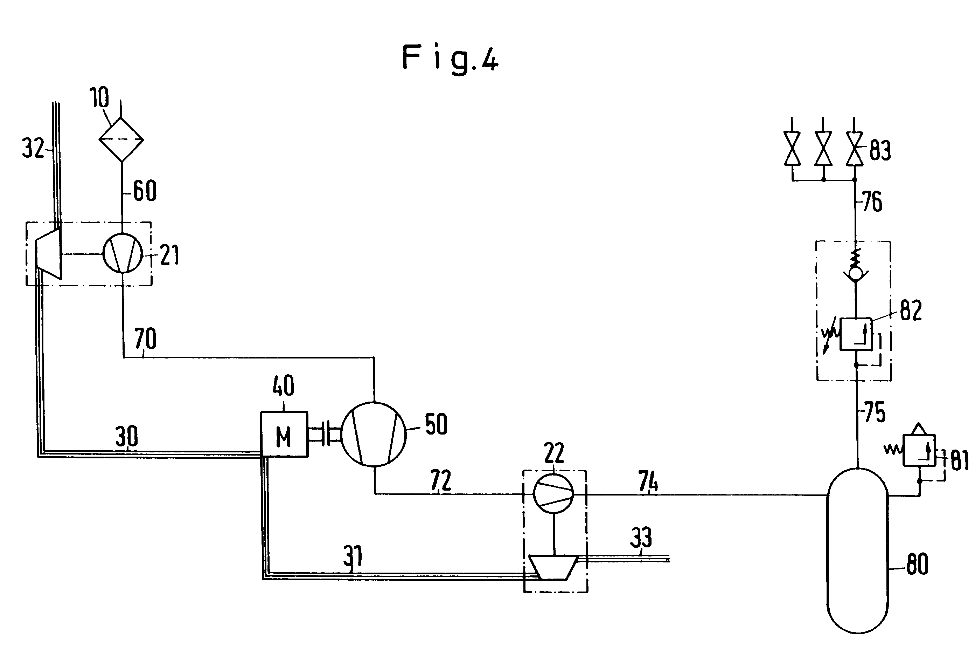

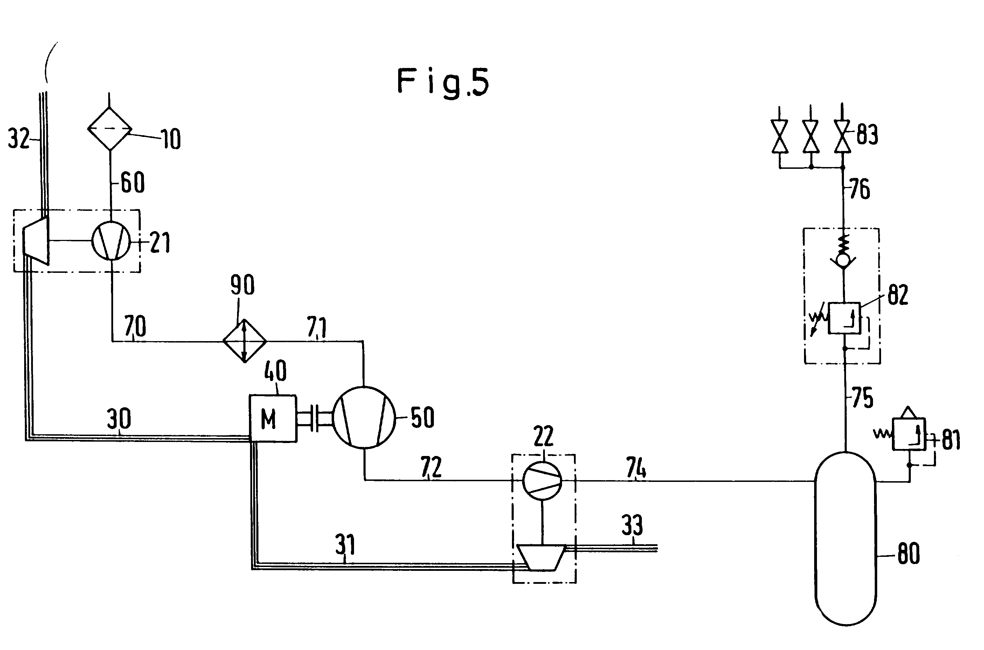

In weiterer Ausgestaltung der Erfindung ist gemäß Fig. 4 eine Verdichteranlage dargestellt, bei der sowohl vor als auch hinter dem Verdichter 50 je ein Abgasturbolader 21 und 22 vorgesehen sind. Ergänzend dazu ist gemäß Fig. 5 eine Verdichteranlage dargestellt, die zusätzlich hinter dem ersten Abgasturbolader den Zwischenkühler 90 aufweist, der die Leistungsaufnahme des Verdichters nochmals verringert. Jeder vorgesehene Zwischenkühler 90 und 91 kann wahlweise mit einem Kondensatablaß versehen sein.

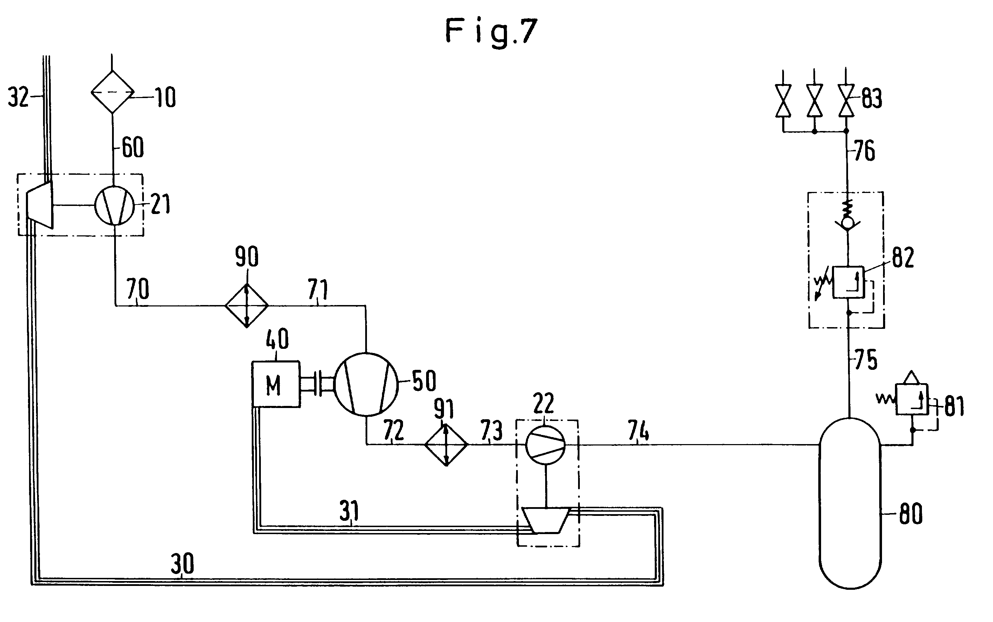

In besonderer Ausgestaltung der Erfindung zeigt Fig. 7 eine Verdichteranlage mit zwei Abgasturboladern 21 und 22, die antriebsseitig in Reihe geschaltet sind. Dabei wird das Abgas der Wärmekraftmaschine 40 durch die Abgasleitung 31 zunächst der Antriebsseite des vorgeordneten Abgasturboladers 22 zugeführt. Im Abgasturbolader 21 wird das Abgas weiter entspannt und durch die Abgasleitung 32 abgeführt. Der Vorteil dieser Ausgestaltung besteht darin,daß dem nachverdichtenden Abgasturbolader 22, der eine größere Arbeit zu verrichten hat, das energierreiche Abgas direkt ohne Bypass-Verluste zugeführt wird und das teilentspannte Abgas anschließend zur Verdichtung im Abgasturbolader 21 weiterverwendet wird.

## Patentansprüche

1. Verdichteranlage zur Erzeugung von Druckluft mit einem Verdichter (50), der durch die Nutzseite einer Wärmekraftmaschine (40) angetrieben wird, wobei die Energie der Wärmekraftmaschine (40) im wesentlichen für den Antrieb des Verdichters (50) genutzt wird, und über eine Leitung (72,74,75,76) mit den Verbrauchsstellen verbunden ist und einem Abgasturbolader (21,22), der antriebsseitig an der Abgasseite der Wärmekraftmaschine (40) angeschlossen und über eine Leitung (70,71) mit dem Verdichter (50) verbunden ist,
dadurch gekennzeichnet,
daß der Abgasturbolader (21) in der Saugleitung (60,70,71) des einen veränderlichen Verdichtungsraum aufweisenden Verdichters (50) angeordnet ist und die Druckleitung (72) die Verbindung zwischen dem Verdichter (50) und einem Druckbehälter (80) bildet, der über eine weitere Leitung (75,76) mit den Verbrauchsstellen verbunden ist.

2. Verdichteranlage nach Anspruch 1,
dadurch gekennzeichnet,
daß zwei Abgasturbolader (21,22) vorgesehen sind, wobei der eine (21) vorgeordnet in der Saug-(60,70,71) und der andere (22) nachgeordnet in der Druckleitung (72,73,74) des Verdichters (50) angeordnet ist.

3. Verdichteranlage nach Anspruch 2,
dadurch gekennzeichnet,
daß die Antriebsseiten der Abgasturbolader (21,22) so in Reihe angeordnet sind, daß im Abgasweg der Wärmekraftmaschine (40) zunächst die Antriebsseite des in der Druckleitung (72,73,74) angeordneten Abgasturboladers (22) zur Nachverdichtung und anschließend die Antriebsseite des in der Saugleitung (60,70,71) angeordneten Abgasturboladers (21) zur Vorverdichtung liegt.

4. Verdichteranlage nach den Ansprüchen 1 bis 3,
dadurch gekennzeichnet,
daß zwischen dem Abgasturbolader (21,22) und dem Verdichter (50) jeweils ein Zwischenkühler (90,91) vorgesehen ist.

## Claims

1. A compressor unit for producing compressed air, comprising a compressor (50) which is driven by the effective side of a thermal engine (40), the energy of the thermal engine (40) being used substantially for driving the compressor (50), and being connected via a line (72, 74, 75, 76) to the consumption points, and an exhaust-gas turbocharger (21, 22), which is connected on the drive side to the exhaust gas side of the thermal engine (40) and is connected via a line (70, 71) to the compressor (50),
characterised in that the exhaust-gas turbocharger (21) is arranged in the suction line (60, 70, 71) of the compressor (50), which bears a changeable compression space, and the pressure line (72) forms the connection between the compressor (50) and a pressure vessel (80), which is connected via a further line (75, 76) to the consumption points.

2. A compressor unit according to Claim 1,
characterised in that two exhaust-gas turbochargers (21, 22) are provided, one (21) being arranged in front in the suction line (60, 70, 71) and the other (22) being arranged at the rear in the pressure line (72, 73, 74) of the compressor (50).

3. A compressor unit according to Claim 2,
characterised in that the drive sides of the exhaust-gas turbocharger (21, 22) are arranged in series such that first of all the drive side of the exhaust-gas turbocharger (22) arranged in the pressure line (72, 73, 74) for secondary compression and then the drive side of the exhaust-gas turbocharger (21) arranged in the suction line (60, 70, 71) for pre-compression are located in the exhaust gas path of the thermal engine (40).

4. A compressor unit according to Claims 1 to 3,
characterised in that in each case an intermediate cooler (90, 91) is provided between the exhaust-gas turbocharger (21, 22) and the compressor (50).

## Revendications

1. Installation de compression pour engendrer de l'air comprimé, comportant un compresseur (50) qui est entraîné par la face utile d'un moteur thermique (40), l'énergie du moteur thermique (40) étant utilisée essentiellement pour l'entraînement du compresseur (50), et qui est relié par l'intermédiaire d'une liaison (72,74,75,76) aux zones de consommation, et une turbosoufflante à gaz d'échappement (21,22) qui est raccordée, sur la face d'entraînement, à la face de gaz d'échappement du moteur thermique (40) et qui est reliée par l'intermédiaire d'une liaison (70,71) au compresseur (50),
caractérisée en ce que la turbosoufflante à gaz d'échappement (21) est agencée dans la liaison d'aspiration (60,70, 71) du compresseur (50) présentant un espace de compression modifiable, et la liaison de pression (72) forme la liaison entre le compresseur (50) et un récipient de pression (80) qui est relié, par l'intermédiaire d'une liaison supplémentaire (75,76), aux zones de consommation.

2. Installation de compression selon la revendication 1, caractérisée en ce que l'on prévoit deux turbosoufflantes à gaz d'échappement (21,22), l'une (21) étant agencée en amont dans la liaison d'aspiration (60,70,71) et l'autre (22) étant agencée en aval dans la liaison de pression (72,73,74) du compresseur (50).

3. Installation de compression selon la revendication 2, caractérisée en ce que les faces d'entraînement de la turbosoufflante à gaz d'échappement (21,22) sont agencées en rangée de sorte que, dans le trajet du gaz d'échappement du moteur thermique (40), sont situées tout d'abord la face d'entraînement de la turbosoufflante à gaz d'échappement (22) agencée dans la liaison de pression (72,73,74), pour la recompression, et ensuite la face d'entraînement de la turbosoufflante à gaz d'échappement (21) agencée dans la liaison d'aspiration (60,70,71), pour la pré-compression.

4. Installation de compression selon l'une des revendications 1 à 3,
caractérisée en ce que l'on prévoit entre la turbosoufflante à gaz d'échappement (21,22) et le compresseur (50), à chaque fois un élément de refroidissement intermédiaire (90,91).
